# EUROPÄISCHE PATENTSCHRIFT

(11) **EP 0 484 831 B1**
(45) Veröffentlichungstag und Bekanntmachung des Hinweises auf die Patenterteilung: **03.02.1993**
(21) Anmeldenummer: 91118649.2
(22) Anmeldetag: 31.10.1991
(51) Int. Cl.: B60C 15/00, B60C 9/06

(54) **Luftreifen für Fahrräder**
Bicycle tyre
Bandage pneumatique pour bicyclette

(30) Priorität: 03.11.1990 DE 4034986; 30.10.1991 DE 4135838
(43) Veröffentlichungstag der Anmeldung: 13.05.1992
(73) Patentinhaber: Continental Aktiengesellschaft, 30165 Hannover (DE)
(72) Erfinder: Schulte, Rüdiger, W-5788 Winterberg 12 (DE); Detzner, Gert, W-3540 Korbach (DE); Mahling, Rolf, W-3540 Korbach (DE)

(56) Entgegenhaltungen:
- EP-A- 0 113 578
- FR-A- 1 554 424
- LU-A- 68 338

## Beschreibung

Die Erfindung bezieht sich auf einen Luftreifen für Fahrräder, der eine an zwei Wulstkernen verankerte diagonale Karkasse aufweist.

Die gattungsbildende europäische Patentanmeldung 0 113 578 mit Priorität aus der japanischen Patentanmeldung 59-118 506 beschreibt als Stand der Technik Motorradreifen, deren Karkasse aus mindestens zwei Lagen aufgebaut ist, von denen beide die Wulstkerne mit kurzen Umbucken umschlingen. Die Laufflächenbreite des dort beauspruchten Reifens beträgt das 1,15-fache der Reifenhöhe, die vom radial innersten Umfang der Wulstzehe bis zum Zenit gemessen wird. Die Anmeldung stammt aus einer Zeit (1984) wo bereits die Federung beider Räder eines Motorrades selbstverständlich und bei einer Bauhöhe des Reifens zwischen 70 und 85 mm ein Betriebsluftdruck von etwa 2,5 bis 3,0 bar vorgesehen wurde, ohne daß der Reifen bis zum Felgenhorn durchschlug.

Das französische Patent 1.554.424 lehrt gattungsfremde Fahrzeugluftreifen mit zwei Karkasslagen mit kurzen Umbucken und mit in den Seitenwänden radialer Ausrichtung der Karkaßfäden (Radialkarkasse) und einer Abknickung dieser Festigkeitsträger in der Laufstreifenzone in eine diagonale Richtung. In der Laufstreifenzone sind zwischen den zwei Karkasslagen gleichgerichtete Zenitlagen oder Breaker angeordnet, die in ihrer Schrägstellung nicht zueinander sondern zu den ebenfalls untereinander gleichgerichteten Karkaßlagen komplementär sind.

Der Erfindung liegt das Problem zugrunde, daß bislang besonders geringe Rollwiderstände an Fahrrädern nur dadurch realisiert werden konnten, daß die Reifenquerschnitte klein gehalten wurden. Unter Inkaufnahme verschlechterter Reifenfederung konnte dadurch der Walkweg der Seitenwände kleingehalten werden. Aufgrund des diagonalen Karkaßaufbaus lag bislang das Verhältnis zwischen Reifenbreite und -höhe in der Nähe von 1, und zwar umso genauer bei 1, desto höher der Betriebsluftdruck war. Nur bei Drücken unter 3 bar war eine Abweichung bis zu 0,15 zu beiden Seiten hin möglich. Dementsprechend mußten rollwiderstandsarme Fahrradreifen sehr schmale Laufflächen aufweisen. Solche Bereifungen sind von Rennfahrrädern her bekannt. Diese Bereifungen setzen gut befestigte Straßen voraus.

Die modernen Fahrradkäufer erwarten jedoch zunehmend Mobilität auch abseits gut befestigter Straßen; deutlichster Ausdruck dieser Erwartung ist das Aufkommen, die weite Verbreitung und das hohe Preisniveau der sogenannten Mountain-Bikes (MTB). Deren breite Reifenquerschnitte führen auf weichen Untergründen zu geringeren Bodendrücken und verringertem Einsinken und damit zu besserem Kraftschluß bei geringerem Rollwiderstand. Allerdings sind diese breiten Reifen im Rollwiderstand auf befestigten Wegen den schmaleren Reifen unterlegen.

Bei den Reifen für die sogenannten All-Terrain-Bikes (ATB) sind die Grobstolligkeit der MTB-Reifen in abgemilderter Form mit schmalen Reifenquerschnitten kombiniert. Zwar weisen die ATB-Reifen auf befestigter Straße tatsächlich einen geringeren Rollwiderstand auf als die MTB-Reifen (und einen höheren als Straßenrennreifen), sind dafür aber auf weichen Untergründen den MTB-Reifen unterlegen (und den Straßenrennreifen überlegen).

Der Zielkonflikt ist also keineswegs entschärft worden, sondern es ist lediglich ein Kompromiß zwischen beiden Extremen angegeben worden.

Aufgabe der Erfindung ist es, gattungsgemäße Fahrradreifen zu schaffen, die geringen Rollwiderstand und geringe Pannenanfälligkeit miteinander vereinen bei günstigem Fahrverhalten auch auf weichen Untergründen.

Die Aufgabe wird erfindungsgemäß dadurch gelöst, daß bei einem Betriebsluftdruck von mindestens 3,5 bar die Breite des Reifens mindestens das 1,2-fache der Höhe des Reifens beträgt und, daß die Fadendichte oder Schichtenanzahl im Zenit um mindestens 30 % größer ist als in den Seitenwänden, daß die Winkel zur Umfangsrichtung 50° bis 70° betragen und dem Betrage nach gleich sind, und, daß im Laufflächenbereich zwischen den beiden Karkaßlagen ein Breaker-Paket angeordnet ist.

Der Erfindung liegt die Erkenntnis zugrunde, daß die Erhöhung der Reifenbreite weniger zur Erhöhung des Rollwiderstandes auf befestigter Piste beiträgt als die Erhöhung der Reifenhöhe. Dies fiel bislang nicht auf, weil bei Diagonalreifen Höhe und Breite aneinander gekoppelt waren.

Erfindungsgemäße Reifen haben vorzugsweise etwa die Bauhöhe der gängigen ATB-Reifen und eine Laufflächengestaltung und -breite ähnlich den MTB-Reifen. Erfindungsgemäße Reifendimensionen sind beispielsweise: 54/70-559, 47/80-559, 47/80-622 und 37/80-622, wobei die erste Zahl die Reifenbreite (ohne Schrift) in mm, die zweite das Verhältnis von Reifenhöhe zu Reifenbreite in % und die dritte den Felgendurchmesser in mm angibt. Die drei erstgenannten Dimensionen werden zweckmäßigerweise mit einem Luftdruck von 3,5 bar, die letztgenannte mit 4,0 bar betrieben.

Für den Freizeitbedarf auf Fahrrädern scheiden Stahlgürtelreifen von prinzipiell ähnlichem Aufbau wie PKW-Reifen aus, weil diese aufgrund der Verarbeitungsschwierigkeiten der im Fahrradbereich erforderlichen sehr dünnen Stahldrähte und aufgrund kleiner Stückzahl zu teuer sein müßten und zudem aufgrund ihrer Radialkarkasse gewöhnungsbedürftig sind bei Seitenkraftübertragung.

Aus diesem Sachverhalt ergab sich das Problem, wie in fahrradgerechter Weise trotz Festhalten an einer Diagonalkarkasse die erfindungsgemäße Abplattung der Lauffläche im Querschnitt erreicht werden könnte. Die erfindungsgemäße Lösung ermöglicht einen besonders geringen Rollwiderstand, weil die Schichtenanzahl in der Seitenwand dem bei Diagonalreifen möglichen Minimum von 2 entspricht.

Infolge der erfindungsgemäß kurzen Reifenseitenwände ergibt sich das Problem erhöhten Reifenabriebes an der radial äußeren Kante des Felgenhornes. Die erfindungsgemäße Lösung zeichnet sich dadurch aus, daß an dieser Stelle durch kurze Umbucke der Lagen ohne weiteren Aufwand eine Verstärkung gegeben ist.

Der für die Reifenbreite ungewöhnlich hohe Betriebsluftdruck verhindert ein Durchschlagen des Reifens bis auf die Felgenhörner. Damit trotz des hohen Luftdruckes der angestrebte niedere Querschnitt erzielt wird, ist eine starke Einschnürung im Zenitbereich erforderlich. Sie wird erreicht durch die hohe Schichtenanzahl bzw. Fadendichte im Laufflächenbereich, besonders bei Gestaltung gemäß Anspruch 4.

Wegen der trotz hohen Luftdruckes verringerten Querschnittkrümmung vermindert sich der Bodendruck. So erreichen erfindungsgemäße Fahrradreifen eine sehr geringe Pannenanfälligkeit. Hierdurch wird eine schlauchlose Ausführung von Fahrradreifen erstmals ermöglicht. Die damit einhergehende Rollwiderstandsverminderung bringt die erfindungsgemäßen, universell einsetzbaren Wulstreifen bezüglich ihres Rollwiderstandes in die Nähe zu den genähten Schlauchreifen des Straßenrennsportes.

Die Erfindung wird nachfolgend anhand von fünf Figuren erläutert. Es zeigt:
Figur 1 im Querschnitt einen erfindungsgemäßen Fahrradluftreifen,
Figuren 2 und 3 den gleichen Reifen in teilgeschnittener Draufsicht,
Figur 4 im Querschnitt einen erfindungsgemäßen Fahrradluftreifen gemäß den Ansprüchen 3 und 5 und
Figur 5 den gleichen Reifen in teilgeschnittener Draufsicht.

Zur vereinfachten Darstellung sind in allen Querschnitten die Cordgewebeschichten nur als Strich dargestellt. Die auf und in den Cordgewebeschichten haftenden Kautschukschichten sind zwecks Übersichtlichkeit nicht dargestellt.

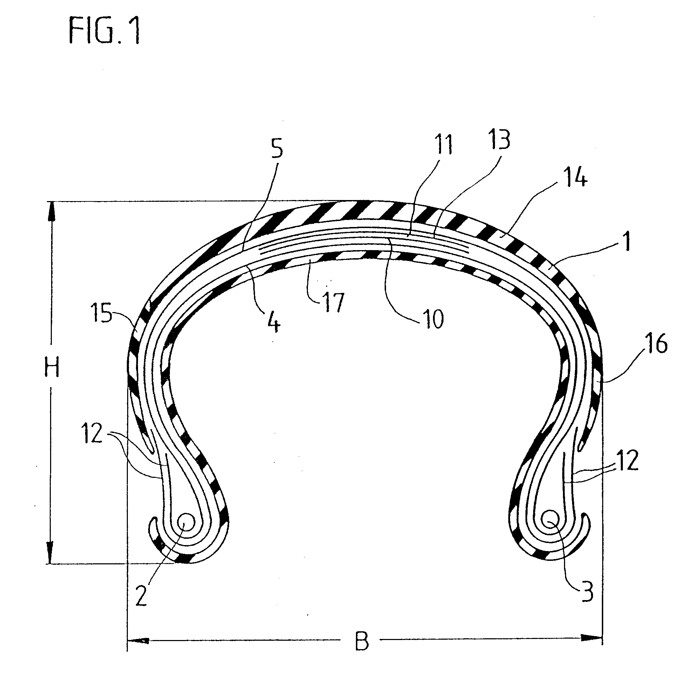

Die Figur 1 zeigt im Querschnitt einen erfindungsgemäßen Fahrradluftreifen mit einem zwischen den zwei Karkaßlagen 4 und 5 angeordneten Breaker-Paket 11, welches aus einem inneren Breaker-Streifen 10 und einem äußeren Breaker-Streifen 13 besteht. Die Breaker-Streifen sind seperat geschnitten und aufgelegt, stehen also nicht in Verbindung mit irgendwelchen Umbucken. Die Breaker-Streifen dienen dazu, eine Niederquschnitt-Kontur zu erzielen.

Beide Karkaßlagen sind mit kurzen Umbucken 12 um die Wulstkerne 2, 3 geschlungen und bilden (Galgenschlingen) 6 bis 9 aus. Die kurzen Umbucke haben in Verbindung mit der Niederquerschnitt-Kontur den Vorteil, daß sie Schutz vor Anscheuerungen durch die Felgenhörner bieten ohne kostspieliges Auflegen zusätzlicher Verstärkungsstreifen.

Dieser Reifen ist mit einer besonders gasdichten Innenseele 17 ausgestattet, vorzugsweise aus Butylkautschuk und kann daher ohne Schlauch montiert bzw. gefahren werden. Hierdurch ist die Montage erleichtert und der Rollwiderstand gesenkt.

In üblicher Weise ist der Rohling 1 mit einem Laufstreifen 14 und Seitenwandgummis 15 und 16 ausgestattet.

Der Querschnitt gemäß Figur 1 bezieht sich sowohl auf Ausführungen mit Breakern, deren Fäden annähernd in Umfangsrichtung verlaufen, wodurch eine besonders wirkungsvolle Einschnürung erreicht wird, was im Verhältnis zur Breite besonders geringe Reifenhöhen ermöglicht, als auch auf solche Ausführungen, wo die Breaker-Fäden gleichgerichtet mit den Fäden der um die Wulstkerne 2, 3 geschlungenen Karkaßlagen 4, 5 verlaufen.

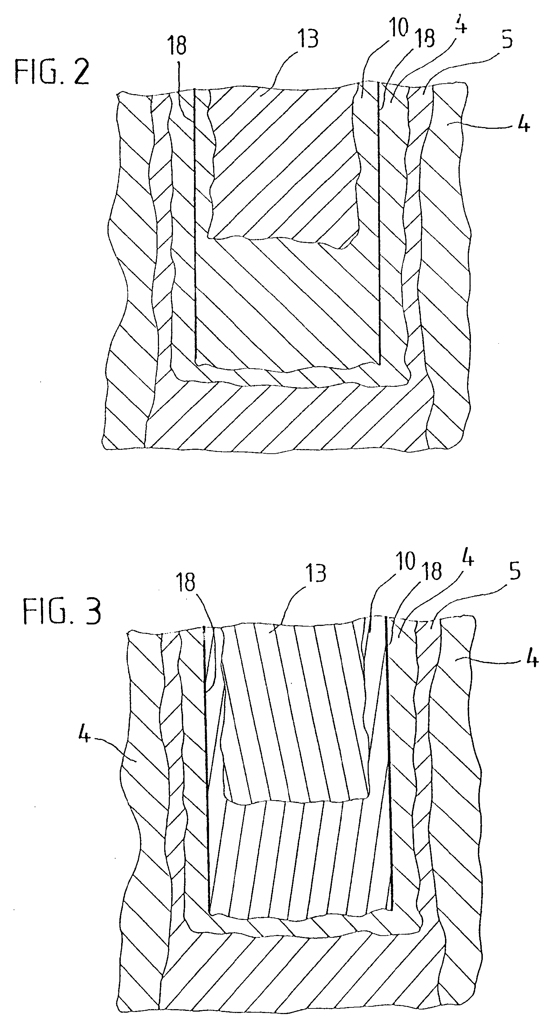

Die Figuren 2 und 3 zeigen verschiedene Reifen gemäß dem Querschnitt aus Figur 1 in teilgeschnittener Draufsicht, wodurch die Fadenwinkel sichtbar werden. Im Zenitbereich wurde in den oberen ¾ des Bildbereiches die äußere, also die zweite Karkaßlage 5 weggeschnitten, sodaß darunter nochmal die am Bildrand erkennbare erste Karkaßlage 4 erscheint.

In den Figuren 2 und 3 liegt im Zenitbereich auf der ersten Karkaßlage 4 der innere Breaker-Streifen 10, dessen Schnittkanten 18 in dicker Volllinie dargestellt sind. Darüber befindet sich der äußere Breaker-Streifen 13.

Bei der in Figur 2 gezeigten, bevorzugten Ausführung sind die Fäden des äußeren Breakers 13 und der benachbarten zweiten Karkaßlage 5 einerseits und die Fäden des inneren Breakers 10 und der ersten, der inneren Karkaßlage 4 andererseits nach Betrag und Orientierung gleichsteigend.

Bei sparsamen Kautschukeinsatz legen sich benachbarte gleichsteigende Schichten so, daß die Fäden der einen Schicht in den Fadenlücken der anderen Schicht zu liegen kommen. Dieser Effekt setzt voraus und ermöglicht die schwache Bemessung der Kautschukbeschichtung der Gewebelagen, ohne Lufteinschlüsse entstehen zu lassen. Der geringe Kautschukeinsatz hält das Reifengewicht und die Menge des zu walkenden Gummis und damit den Rollwiderstand niedrig; beides ist für Fahrradreifen besonders wichtig.

So tritt auch hier bei der Vulkanisation der Effekt ein, daß die Breaker-Streifen in die jeweils benachbarte Karkaßlage eindringen, was einen besonders geringen Kautschukeinsatz im Zenit ermöglicht. Im Querschnitt durch den fertigen Reifen wirkt jedes der genannten Schichtenpaare fast wie eine einzige Schicht, allerdings mit verdoppelter Fadendichte im Zenit. Die erhöhte Fadendichte im Zenit wirkt gürtelähnlich und ermöglicht die Ausbildung eines Fahrradreifens mit niederigem Querschnitt.

Figur 3 zeigt in zur Figur 2 analogen Darstellungsweise eine andere Variante eines Reifens mit einem Querschnittaufbau gemäß Figur 1; hier weisen die beiden Breaker-Lagen 10, 13 wesentlich spitzere Winkel zur Umfangsrichtung auf und zwar 10°. Durch diese steile Stellung ist zwar kein Ineinandereindringen benachbarter Lagen möglich, dafür wird jedoch eine besonders hohe Einschnürung und somit ein besonders niedriger Reifenquerschnitt ermöglicht.

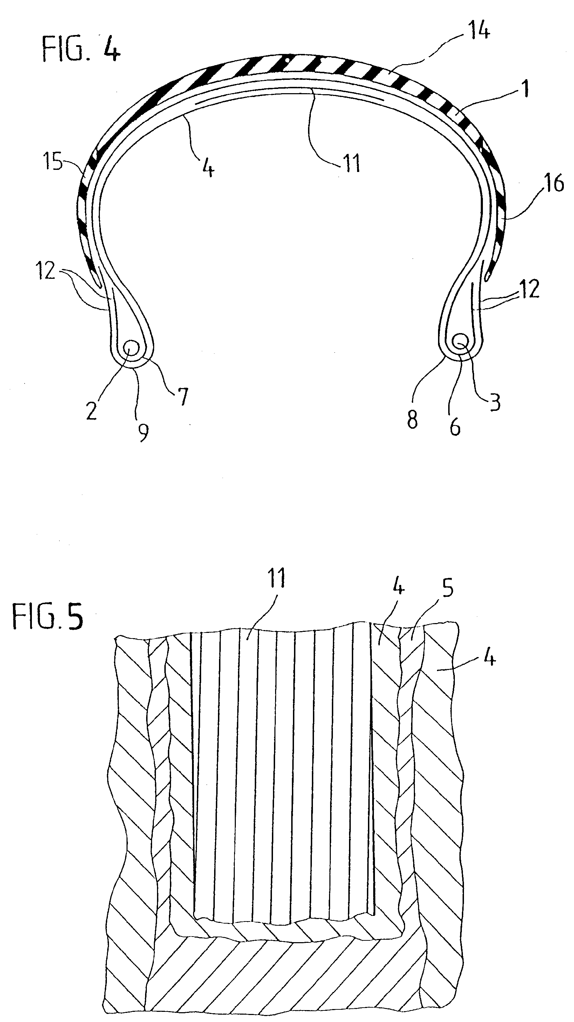

Figur 4 zeigt in zur Figur 1 analogen Darstellungsweise einen Reifen, dessen Breaker-Paket 11 nur aus einer einzigen Schicht besteht. Um eine weitgehende Symmetrie des Verformungsverhaltens zu erreichen, sind die Fäden des Breakers 11 - wie in Figur 5, einer teilgeschnittenen Draufsicht analog Figur 2 ersichtlich - entsprechend Anspruch 2 annähernd in Umfangsrichtung gestellt. Diese Ausrichtung wird vorteilhafterweise mit einem Verfahren gemäß Anspruch 3 erzielt.

Die Erfindung ermöglicht im für Fahrräder bestehenden Kostenrahmen Niederquerschnitt-Reifen und entspannt dadurch die Zielkonkurrenz zwischen niedrigem Rollwiderstand auf befestigten Wegen einerseits und unbefestigten Wegen andererseits. Erfindungsgemäße Reifen sind zur Ausrüstung von ATBs (All-Terrain-Bikes) bestimmt und ermöglichen einen Kompromiß auf höherem Niveau zwischen den Extremen MTB (Mountain-Bike) und Straßenrennrad.

## Patentansprüche

1. Luftreifen für Fahrräder mit an zwei Wulstkernen (2, 3) verankerter diagonaler Karkasse, die zwei Lagen (4, 5) aufweist, die beide die Wulstkerne (2, 3) mit kurzen Umbucken (12) umschlingen, und die (4, 5) Winkel zur Umfangsrichtung einnehmen in entgegengesetzter Orientierung,
**dadurch gekennzeichnet**,
- daß bei einem Betriebsluftdruck von mindestens 3,5 bar die Breite (B) des Reifens mindestens das 1,2-fache der Höhe (H) Reifens vom radial innersten Umfang der Wulstzehe bis zum Zenit beträgt,
- daß die Fadendichte oder Schichtenanzahl im Zenit um mindestens 30 % größer ist als in den Seitenwänden,
- daß die Winkel zur Umfangsrichtung 50° bis 70° betragen und dem Betrage nach gleich sind, und
- daß im Laufflächenbereich zwischen den beiden Lagen (4, 5) ein Breaker-Paket (11) angeordnet ist.

2. Luftreifen nach Anspruch 1 dadurch gekennzeichnet, daß das Breaker-Paket (11) aus einer einzigen Lage besteht, deren Fadenwinkel zur Umfangsrichtung höchstens 2° beträgt.

3. Verfahren zur Herstellung eines Luftreifens nach Anspruch 2
**dadurch gekennzeichnet,** daß die eine Breaker-Lage (11) aus einem einzigen Faden auf einer vorbombierten ersten Karkaßlage (4) durch Aufspulen erzeugt wird.

4. Luftreifen nach Anspruch 1 dadurch gekennzeichnet, daß das Breaker-Paket (11) aus zwei Lagen (10, 13) besteht, die bei entgegengesetzter Orientierung den betragsmäßig gleichen Fadenwinkel gegenüber der Umfangsrichtung aufweisen.

5. Luftreifen nach Anspruch 4 dadurch gekennzeichnet, daß der Fadenwinkel der Breaker-Lagen (10, 13) zwischen 6° und 17° liegt.

6. Luftreifen nach Anspruch 4 dadurch gekennzeichnet, daß der Fadenwinkel jeder Breaker-Lage (10, 13) nach Betrag und Orientierung mit der benachbarten, die Wulstkerne (2) umschlingenden Karkaßlage (4, 5) übereinstimmt.

7. Luftreifen nach Anspruch 1 dadurch gekennzeichnet, daß er - wie an sich bei PKW- und LKW-Reifen bekannt - auf seiner Innenseite eine Dichtungsschicht (17), vorzugsweise aus Butylkautschuk, fest angefügt ist, sodaß dieser Luftreifen für Fahrräder für den schlauchlosen Betrieb geeignet ist.

## Claims

1. Pneumatic tyre for bicycles, having a diagonal carcase, which is secured on two bead cores (2, 3) and includes two plies (4, 5), which both wrap around the bead cores (2, 3) with short loops (12), and said plies (4, 5) assume angles relative to the circumferential direction in opposite orientation, characterised
- in that, at an operational pneumatic pressure of at least 3.5 bars, the width (W) of the tyre is at least 1.2 times the height (H) of the tyre from the radially innermost circumference of the bead toe to the crown;
- in that the filament density or number of layers in the crown is at least 30 % greater than in the side walls;
- in that the angles relative to the circumferential direction are 50° to 70° and are of identical size; and
- in that a breaker bundle (11) is disposed in the tread surface region between the two plies (4, 5).

2. Pneumatic tyre according to claim 1, characterised in that the breaker bundle (11) is formed from a single ply, the maximum filament angle of which is 2° relative to the circumferential direction.

3. Method of producing a pneumatic tyre according to claim 2, characterised in that the one breaker ply (11) is produced from a single filament on a first precambered carcase ply (4) by a winding-on process.

4. Pneumatic tyre according to claim 1, characterised in that the breaker bundle (11) is formed from two plies (10, 13), which have the same-sized filament angle relative to the circumferential direction with opposed orientation.

5. Pneumatic tyre according to claim 4, characterised in that the filament angle of the breaker plies (10, 13) is between 6° and 17°.

6. Pneumatic tyre according to claim 4, characterised in that the filament angle of each breaker ply (10, 13) is identical, in respect of size and orientation, to the adjacent carcase ply (4, 5) which loops around the bead cores (2).

7. Pneumatic tyre according to claim 1, characterised in that - as is known per se with passenger vehicle and heavy goods vehicle tyres - a sealing layer (17), preferably formed from butyl rubber, is securely attached to its internal surface, so that this pneumatic tyre for bicycles is suitable for tubeless operation.

## Revendications

1. Pneumatique pour bicyclettes comportant une carcasse diagonale accrochée sur deux tringles de talons (2, 3), qui comporte deux couches (4, 5), qui entourent toutes deux les tringles de talons (2, 3) par de courts rebords (12) et qui font avec la direction circonférentielle des angles (4, 5) orientés dans des sens opposés, caractérisé en ce que :
- dans le cas d'une pression d'air de gonflage d'au moins 3,5 bars (3,5 x 10⁵ Pa), la largeur (B) du pneumatique est au moins égale à 1,2 fois la hauteur (H) du pneumatique, mesurée entre la périphérie radialement intérieure du rebord de talon jusqu'au zénith,
- la densité des fils ou le nombre de couches dans la zone zénithale est supérieur d'au moins 30 % à ce qu'on a dans les flancs,
- les angles avec la direction circonférentielle s'élèvent à 50 à 70° et ont des valeurs identiques, et
- un ensemble de renforcement (11) est disposé dans une zone de surface de roulement située entre les deux couches (4, 5).

2. Pneumatique selon la revendication 1, caractérisé en ce que l'ensemble de renforcement (11) se compose d'une seule couche, dont l'angle des fils avec la direction circonférentielle s'élève au maximum à 2°.

3. Procédé de fabrication d'un pneumatique selon la revendication 2, caractérisé en ce que la couche de renforcement (11) est produite par un roulement d'un seul fil sur une première couche de carcasse (4) bombée au préalable.

4. Pneumatique selon la revendication 1, caractérisé en ce que l'ensemble de renforcement (11) se compose de deux couches (10, 13) dont les fils font avec la direction circonférentielle des angles de valeurs identiques et d'orientations opposées.

5. Pneumatique selon la revendication 4, caractérisé en ce que l'angle des fils des couches de renforcement (10, 13) est compris entre 6° et 17°.

6. Pneumatique selon la revendication 4, caractérisé en ce que l'angle des fils de chaque couche de renforcement (10, 13) concorde en grandeur et en orientation avec ce qu'on a dans la couche de carcasse (4, 5) adjacente et entourant les tringles de talons (2).

7. Pneumatique selon la revendication 1, caractérisé en ce que - comme cela est connu pour des pneumatiques de voitures de tourisme et de camions - il est pourvu sur son côté intérieur d'une couche d'étanchéité (17), de préférence en caoutchouc butylé, de sorte que ce pneumatique est approprié pour des bicyclettes devant être utilisées sans chambres à air.
